# EUROPÄISCHE PATENTANMELDUNG

(11) **EP 1 903 442 A1**
(43) Veröffentlichungstag der Anmeldung: **26.03.2008**
(21) Anmeldenummer: 06019805.8
(22) Anmeldetag: 21.09.2006
(51) Int. Cl.: G06F 12/02

(54) **Verfahren zum Betrieb eines Automatisierungssystems**

(71) Anmelder: SIEMENS AKTIENGESELLSCHAFT, 80333 München (DE)
(72) Erfinder: Biehler, Georg, 90453 Nürnberg (DE); Dorr, Josef, 90584 Allersberg (DE); Griem, Gorden, 22851 Norderstedt (DE); Lamping, Ulf, 90459 Nürnberg (DE); Oppmann, Herbert, 90425 Nürnberg (DE)

(57) **Zusammenfassung**

Die Erfindung betrifft ein Verfahren zum Betrieb eines Automatisierungssystems (10) mit einem Speicher (18), in dem eine Mehrzahl von Containern (C1, C2) gebildet ist, wobei in jedem Container (C1, C2) eine Anzahl von Paketen (P) speicherbar ist oder gespeichert wird, das sich dadurch auszeichnet, dass ausgehend von einer momentanen Containerbelegung (80) durch darin gespeicherte oder speicherbare Pakete (P) eine Ziel-Containerbelegung (88) mit einem Algorithmus ermittelt wird und eine Platzierung der Pakete zu den Containern (C1, C2) gemäß der ermittelten Ziel-Containerbelegung (88) erfolgt.

## Beschreibung

Die Erfindung betrifft ein Verfahren zum Betrieb eines Automatisierungssystems mit einem Speicher, in dem eine Mehrzahl von Containern gebildet ist, wobei in jedem Container eine Anzahl von Paketen speicherbar ist oder gespeichert wird.

Derartige Automatisierungssysteme sind an sich bekannt. Die vorgenannten Container und die darin gebildeten Pakete werden zum Austausch von Daten zwischen mehreren kommunikativ miteinander verbundenen Automatisierungsgeräten oder zum Austausch von Daten zwischen Softwareapplikationen, die auf einem solchen Automatisierungsgerät ablaufen, genutzt. Nachteilig bei einem Datenaustausch über solche Container und die darin gebildeten Pakete ist jedoch, dass es bei einer Änderung der Anzahl und/oder der Größe der in den Container gebildeten Pakete zu einem als "Stoß" bezeichneten Effekt kommen kann, wenn nämlich aufgrund einer solchen Änderung oder einer zugrunde liegenden Änderungsanforderung das Layout der verwendeten Container geändert wird und dabei die Container zumindest zeitweise entleert werden und die Pakete entsprechend ausgelagert werden, so dass zumindest während einer solchen Auslagerung kein Zugriff auf diese Pakete möglich ist. Diese zumindest kurzzeitig andauernde Behinderung beim Datenaustausch, also der "Stoß", wird als nachteilig empfunden, weil ein solcher Stoß z.B. Reaktions- oder Antwortzeiten in einem Automatisierungssystem beeinflusst. Zudem werden durch die Notwendigkeit der Auslagerung von Paketen zusätzliche Ressourcen, z. B. in Form eines Zwischenspeichers, benötigt.

Der Begriff "Automatisierungssystem" umfasst dabei hier und im Folgenden sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Eine Aufgabe der Erfindung besteht entsprechend darin, ein Verfahren anzugeben, das den o. g. Nachteil vermeidet oder zumindest hinsichtlich seiner Auswirkung reduziert.

Diese Aufgabe wird erfindungsgemäß mit einem Verfahren zum Betrieb eines Automatisierungssystems der o.g. Art mit einem Speicher, in dem eine Mehrzahl von Containern gebildet ist, wobei in jedem Container eine Anzahl von Paketen speicherbar ist oder gespeichert wird, dadurch gelöst, dass ausgehend von einer momentanen Containerbelegung durch darin gespeicherte oder speicherbare Pakete eine Ziel-Containerbelegung mit einem Algorithmus ermittelt wird und eine Platzierung der Pakete in den Containern gemäß der ermittelten Ziel-Containerbelegung erfolgt.

Der Übergang von der momentanen Containerbelegung zur Ziel-Containerbelegung erfolgt dabei derart, dass die sowohl in der momentanen Containerbelegung als auch in der Ziel-Containerbelegung vorgesehenen Pakete permanent im System verbleiben, d.h. dass ein kontinuierlicher Zugriff darauf möglich ist, ohne das zusätzliche Ressource, etwa nach Art eines Zwischenspeichers, benötigt werden. Der Übergang zur Ziel-Containerbelegung erfolgt dabei "historiefrei", d.h. die Ziel-Containerbelegung wird unabhängig von einer jeweiligen momentanen Containerbelegung stets erreicht, dadurch bei dem Ansatz gemäß der Erfindung die Entscheidung, ob ein Paket in dem Automatisierungssystem aufgenommen werden kann oder nicht unabhängig davon ist, in welcher Reihenfolge die Pakete bisher im Automatisierungssystem eingetroffen sind bzw. daraus entfernt wurden.

Vorteilhaft umfasst die Platzierung der Pakete in den Containern gemäß der ermittelten Ziel-Containerbelegung eine Kompaktifizierung und eine Expansion der Containerbelegung. Während der Kompaktifizierung wird eine temporäre Containerbelegung erzeugt, die in die Ziel-Containerbelegung überführbar ist. Anstelle der bisher gemäß dem Stand der Technik verfolgten Strategie, wonach die Pakete aus den Containern ausgelagert werden, so dass einerseits zusätzliche Ressource benötigt werden und andererseits zumindest zeitweise ein Zugriff darauf nicht möglich ist, wobei sich durch dieses Auslagern der nachteilige "Stoß" ergibt, erfolgt also gemäß dem Ansatz entsprechend dieser Ausgestaltung der Erfindung ein Übergang von der momentanen Containerbelegung zur Ziel-Containerbelegung durch eine Zwischenschaltung mindestens einer temporären Konfiguration, hier der temporären Containerbelegung, wobei jede temporäre Konfiguration zumindest die sowohl in der momentanen Containerbelegung als auch in der Ziel-Containerbelegung vorhandenen Pakete im System belässt. Jeder Übergang von einer ersten Containerbelegung zu einer zweiten Containerbelegung ist dabei innerhalb einer durch die Anzahl der jeweils zur Verfügung stehenden Container vorgegebenen Kapazitätsgrenzen, also ohne Verwendung zusätzlicher Ressourcen, jederzeit möglich

Die temporäre Containerbelegung wird mit demselben Algorithmus ermittelt, der auch für die Ermittlung der Ziel-Containerbelegung verwendet wird. Dies vereinfacht die Implementierung des Ansatzes gemäß der Erfindung wie auch eine Verifikation einer solchen Implementation, weil ausgehend von der momentanen Containerbelegung für jede weitere vorgegebene Containerbelegung einschließlich der Ziel-Containerbelegung zur Ermittlung des jeweiligen Layouts der gleiche Algorithmus herangezogen wird.

Während der Kompaktifizierung werden zum Löschen vorgesehene Pakete gelöscht, so dass in der Ziel-Containerbelegung nicht mehr benötigte Pakete zu einem definierten Zeitpunkt aus der Containerbelegung entfernt werden und die in soweit noch verbleibenden Pakete aus der momentanen Containerbelegung in den verfügbaren Containern besonders günstig angeordnet werden können. Pakete sind dabei als zum Löschen vorgesehen erkennbar, wenn sie in der momentanen Containerbelegung, aber nicht in der Ziel-Containerbelegung, enthalten sind.

Während der Kompaktifizierung, insbesondere nachdem eventuell zum Löschen vorgesehene Pakete gelöscht wurden, werden die Pakete den zur Verfügung stehenden Containern gemäß der zuvor ermittelten temporären Containerbelegung zugeordnet.

Im Anschluss an die Kompaktifizierung erfolgt eine Expansion der Containerbelegung, indem die Pakete in den Containern gemäß der Ziel-Containerbelegung platziert werden. Während der Expansion der Containerbelegung werden dabei neue Pakete aufgenommen.

Die abhängigen Ansprüche sind auf bevorzugte Ausführungsformen der vorliegenden Erfindung gerichtet.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: ein Automatisierungssystem mit einer Mehrzahl kommunikativ untereinander verbundener Automatisierungsgeräte,
- FIG 2 und 3: Container mit darin an- oder abgelegten Paketen, wie sie z.B. zum Datenaustausch in dem Automatisierungssystem oder zwischen den Automatisierungsgeräten verwendet werden,
- FIG 4: einen Algorithmus zur Ermittlung einer Ziel-Containerbelegung,
- FIG 5: den Algorithmus gemäß FIG 4 zur Überführung einer momentanen Containerbelegung in eine temporäre Containerbelegung, die in die Ziel-Containerbelegung überführbar ist,
- FIG 6: einen Algorithmus zur Überführung der temporären Containerbelegung in die Ziel-Containerbelegung,
- FIG 7: eine graphische Veranschaulichung einer Ausgangssituation für die Erfindung,
- FIG 8: eine graphische Veranschaulichung von Vorgängen bei der Belegung der Container entsprechend der Erfindung,
- FIG 9: eine graphische Veranschaulichung von Vorgängen bei der Belegung der Container während eines ersten Zwischenschrittes der Erfindung und
- FIG 10: eine graphische Veranschaulichung von Vorgängen bei der Belegung der Container während eines zweiten Zwischenschrittes der Erfindung.

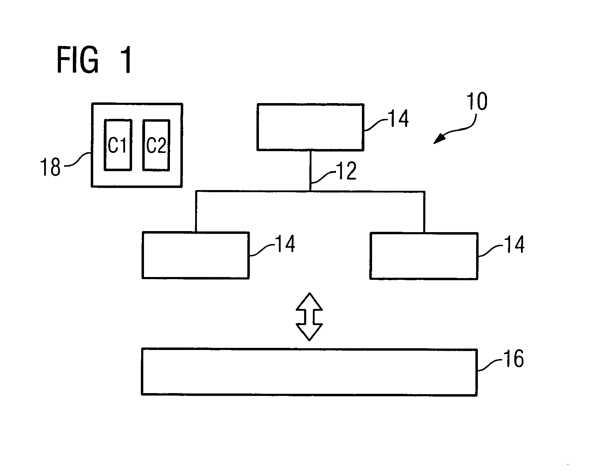

FIG 1 zeigt in schematisch vereinfachter Form ein Automatisierungssystem 10 mit einer Anzahl von untereinander, insbesondere über einen Bus 12, kommunikativ verbundener Automatisierungsgeräte 14. Das Automatisierungssystem 10 ist in an sich bekannter Art und Weise zur Steuerung und/oder Überwachung eines nicht näher dargestellten technischen Prozesses 16 vorgesehen.

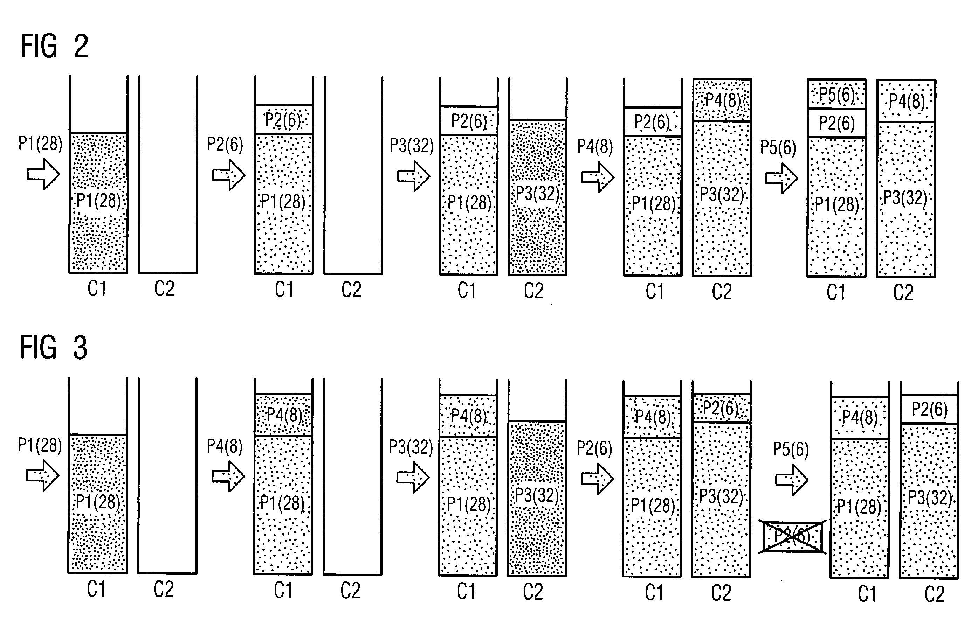

Dem Automatisierungssystem 10 ist zum Datenaustausch zumindest ein Speicher 18 zugeordnet. Alternativ oder zusätzlich ist vorgesehen, dass der Speicher 18 oder jeweils ein Speicher 18 einzelnen Automatisierungsgeräten 14 oder jedem Automatisierungsgerät 14 zugeordnet ist. Die Zuordnung des Speichers 18 erfolgt dabei derart, dass das System 10 oder Gerät 14 den Speicher 18 umfasst oder das System 10 oder das Gerät 14 in geeigneter Art und Weise Zugriff auf den Speicher 18 hat. In dem oder jedem Speicher 18 ist zumindest ein Container, im dargestellten Beispiel zwei Container C1, C2, durch Belegung entsprechender Speicherbereiche gebildet. Dem oder jedem Container sind zum Austausch von Daten in dem System 10 vorgesehene Pakte (vgl. FIG 2) zuordenbar. Die Platzierung des oder jedes Pakets in dem oder jedem vom System 10 umfassten Container C1, C2 kann sich mit der Zeit, also während des Betriebs des Systems 10, ändern.

FIG 2 und FIG 3 zeigen ein Beispiel einer sich mit der Zeit entwickelnden Belegung zweier Container C1, C2. In der Darstellung in FIG 2 treffen die einzelnen Pakete P in der Reihenfolge P1, P2, P3, P4 und P5 ein. Mit der jeweils in runden Klammern angegebenen Größe der einzelnen Pakete P1-P5 kommt es nach der dargestellten "First-Fit-Strategie" - jedes neue Paket P1-P5 wird im ersten Container C1, C2 platziert, der noch ausreichend Speicherplatz für dessen Aufnahme aufweist - zu einer erfolgreichen Verteilung sämtlicher Pakete P1-P5 auf die zur Verfügung stehenden Container C1, C2.

In FIG 3 ist dargestellt, dass eine solche First-Fit-Strategie nicht in jedem Fall zum Erfolg führt und entsprechend für den praktischen Einsatz nur bedingt geeignet ist. Bei dem Szenario gemäß der Darstellung in FIG 3 sind die gleichen Pakete P1-P5 auf die Container C1, C2 zu verteilen. Lediglich die Reihenfolge, in der die Pakete P1-P5 eintreffen, ändert sich, so dass die Pakete P nun in der Reihenfolge P1, P4, P3, P2 und P5 eintreffen. Man erkennt, dass durch die sich ergebende andersartige Belegung der Container C1, C2 beim Eintreffen des Paketes P5 kein Platz mehr für dessen Aufnahme verbleibt. Die First-Fit-Strategie ist also nicht historiefrei, weil der Erfolg von der zeitlichen Abfolge der Platzierung einzelner Pakete in einzelnen Containern abhängt.

Dieses Problem hat man bisher dadurch zu umgehen versucht, dass aus den im System vorgesehenen Containern C1, C2 alle dort gespeicherten oder vorgesehenen Pakete unter Verwendung zusätzlicher Ressourcen temporär zwischengespeichert wurden und aus einem Zwischenspeicher eine neue Verteilung auf die zur Verfügung stehenden Container erfolgt ist. Bei der Verteilung der Pakete aus dem Zwischenspeicher werden diese z.B. der Größe nach absteigend jeweils in dem Container platziert, der entsprechend einem ihm zugewiesenen Index als erster ausreichend freien Speicherplatz zur Aufnahme des Paketes aufweist. Dies ist in soweit nachteilig, als es dabei zu einem "Stoß" im System - wie nachfolgend beschrieben - kommt, da kurzzeitig alle Pakete aus den Containern entnommen und wieder einsortiert werden. Nachdem ein Zugriff auf die Pakete nur während deren Verfügbarkeit in den vom System umfassten Containern möglich ist, sind die Pakete, während sie in dem Zwischenspeicher vorgehalten werden, nicht verfügbar. Evtl. Zugriffe auf die Pakete müssen also suspendiert werden, bis diese wieder in den oder einen der Container einsortiert sind.

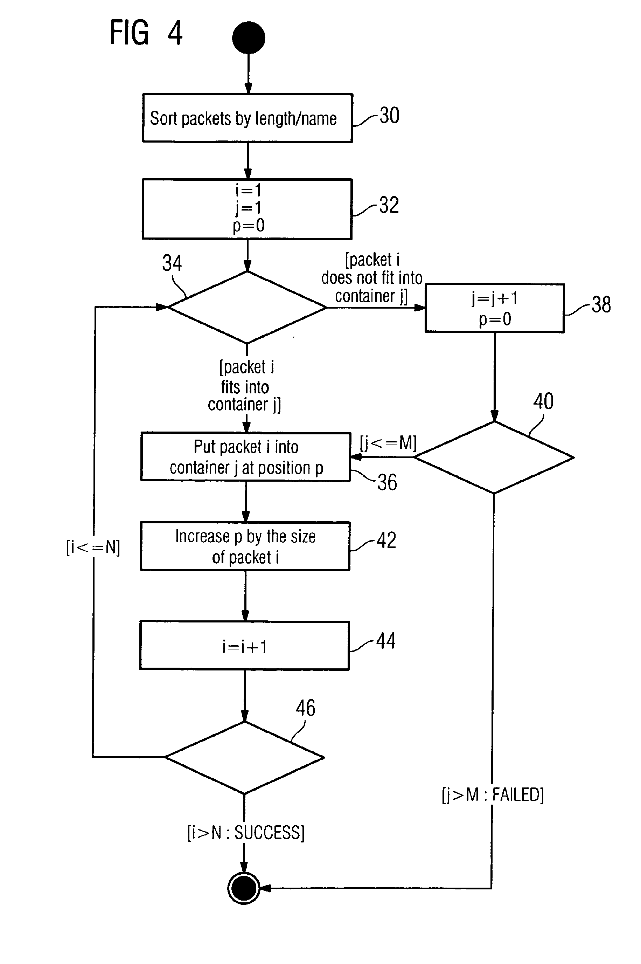

Erfindungsgemäß wird das o. g. Problem, das sich vor allem als Ergebnis dynamischer Änderungsanforderungen ergibt, durch Anwendung der im Folgenden beschriebenen mehrstufigen Strategie gelöst. Nach z.B. einer Änderungsanforderung wird zunächst eine Ziel-Containerbelegung durch einen dafür vorgesehenen Algorithmus, der nachfolgend im Zusammenhang mit FIG 4 erläutert wird, berechnet. Der Algorithmus be- und verarbeitet eine Anzahl von Variablen, wobei *M* die Anzahl der Container im System, *j* einen Containerindex, *N* eine Gesamtzahl oder Zielanzahl von Paketen im System, *i* einen Paketindex und *p* eine Position im Container bezeichnet. In einem ersten Schritt 30 werden die Pakete nach Länge und/oder Name sortiert. Für Pakete mit gleicher Länge wird dabei zusätzlich der Name als Sortierkriterium herangezogen, so dass bei Paketen gleicher Länge das Paket mit numerisch "kleinerem" Namen eine frühere Einsortierung erfährt. In einem zweiten Schritt 32 erfolgt eine Initialisierung bestimmter Variablen. Dann wird in einer ersten Fallunterscheidung 34 überprüft, ob das Paket mit dem Index *i* in den Container mit dem Index *j* passt. Ergibt sich bei der ersten Fallunterscheidung 34, dass das Paket in den jeweiligen Container einsortiert werden kann, wird zum dritten Schritt 36 verzweigt und das jeweilige Paket, also das Paket mit dem Index *i*, dem jeweiligen Container, also dem Container mit dem Index *j*, zugeordnet und zwar an der durch den Inhalt der Variablen *p* bezeichneten Position. Lässt sich das aktuelle Paket nicht in dem momentanen Container einsortieren, wird ausgehend von der ersten Fallunterscheidung 34 zum vierten Schritt 38 verzweigt und dort die Variable *j* zur Referenzierung des jeweiligen Containers inkrementiert und die Position innerhalb des Containers initialisiert. Nachfolgend wird in einer zweiten Fallunterscheidung 40 überprüft, ob der auf diese Weise ausgewählte Container tatsächlich zur Verfügung steht, wobei unter dieser Voraussetzung die Bedingung "*j ≤ M*" erfüllt ist und zum dritten Schritt 36 verzweigt wird und dabei das jeweilige Paket dem neuen Container zugeordnet wird. Ist der neue Container dagegen nicht mehr verfügbar, ist also der im vierten Schritt 38 inkrementierte Index *j* größer als die maximale Anzahl von Containern im System, ist die Zuordnung der Pakete zu den zur Verfügung stehenden Containern nicht möglich und es kommt zu einem Abbruch. Im Anschluss an die Ausführung des dritten Schritts 36, also die Zuordnung eines Paketes zu einem Container, wird die Variable *p* um die Größe des zuletzt einsortierten Paketes inkrementiert, so dass die Variable p einen Bereich referenziert, ab dem in dem Container freier Speicherbereich zur Verfügung steht. Dies erfolgt in einem fünften Schritt 42. In einem sechsten Schritt 44 wird der Index für die zuzuordnenden Pakete inkrementiert, so dass bei einer dritten Fallunterscheidung 46, in der geprüft wird, ob noch weitere Pakete zuzuordnen sind, zur ersten Fallunterscheidung 34 zurück verzweigt werden kann. Sind bereits alle Pakete einsortiert, ist der Algorithmus erfolgreich beendet.

Mit dem vorbeschriebenen Algorithmus, der im Folgenden einfach kurz als Algorithmus bezeichnet wird, lässt sich eine Möglichkeit zur Platzierung einer Anzahl von Paketen in den zur Verfügung stehenden Container ermitteln. Die Möglichkeit zur Platzierung der Pakete in den Containern aber auch eine tatsächliche Platzierung der Pakete in den Containern wird hier und im Folgenden als Konfiguration bezeichnet. Die Erfindung schlägt, wie oben bereits erwähnt, die Zuordnung von Paketen zu und abschließend die Platzierung der Pakete in den Containern auf Basis eines insbesondere zweistufigen Verfahrens vor, wobei ausgehend von einer momentanen Containerbelegung, bei der also die zur Verfügung stehenden Container zumindest teilweise durch darin gespeicherte oder angelegte Pakete belegt sind, eine temporäre Containerbelegung und eine Ziel-Containerbelegung ermittelt werden. Sowohl die temporäre Containerbelegung als auch die Ziel-Container-Belegung werden mit dem Algorithmus ermittelt.

Die momentane Containerbelegung wird dabei in die Ziel-Containerbelegung, wie sie durch den Algorithmus berechnet wurde, überführt (rekonfiguriert). Eine solche Rekonfiguration erfolgt dabei dynamisch und umfasst insbesondere eine erste und eine zweite Phase, wobei während der ersten Phase eine Kompaktifizierung und während der zweiten Phase eine Expansion der Containerbelegung erfolgt. Die erste und die zweite Phase werden entsprechend im Folgenden synonym auch als Kompaktifizierung und Expansion bezeichnet. Während der Kompaktifizierung wird die temporäre Containerbelegung erzeugt, die in die Ziel-Containerbelegung überführbar ist und während der Expansion in die Ziel-Containerbelegung überführt wird.

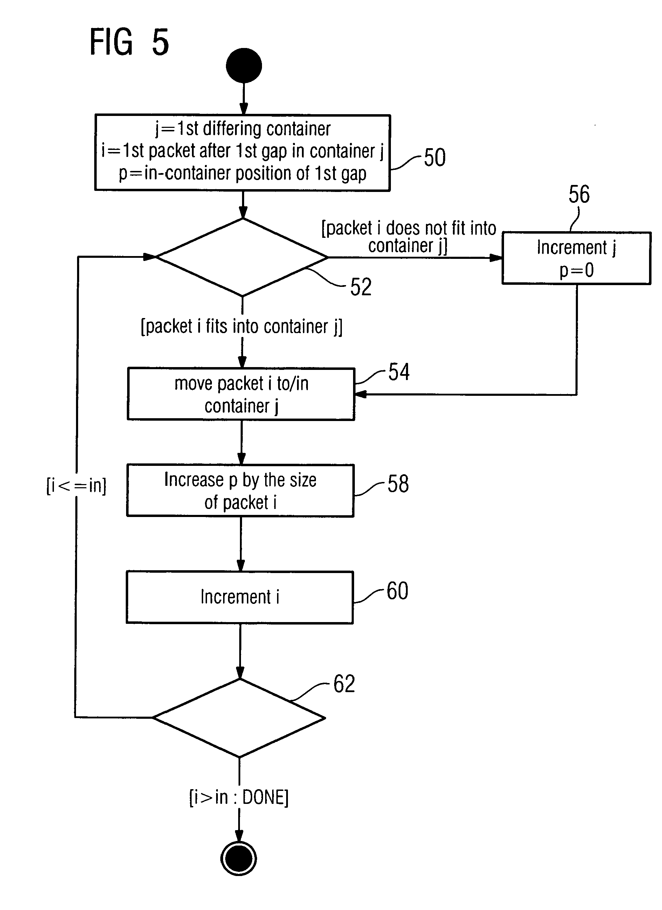

Während der Kompaktifizierung, insbesondere zu Beginn der Kompaktifizierung, erfolgt ein Löschen zum Löschen vorgesehener Pakete. Während einer dafür vorgesehenen "Packet Deletion Phase" werden alle Pakete gelöscht, die in der aktuellen Konfiguration aber nicht in der Ziel-Containerbelegung enthalten sind. Im weiteren Verlauf der Kompaktifizierung verbleiben die restlichen Pakete entweder in dem momentanen Container oder sie werden in einen Container mit einem kleineren Index bewegt. Dazu werden die Container ausgehend vom kleinsten Indexwert aufgebaut. Während der Kompaktifizierung wird jeweils ein Container nach dem anderen aufgebaut. Dieser Vorgang wird als "Container Replacement Phase" bezeichnet und im Folgenden anhand der Darstellung in FIG 5 näher erläutert.

FIG 5 zeigt einen schematisch vereinfachten Verfahrensablauf während der "Container Replacement Phase". Bei den verwendeten Variablen bezeichnet *j* einen Containerindex, in eine Anzahl temporärer Pakete im System, *i* einen Paketindex und *p* eine Position innerhalb eines Containers. Zunächst (Block 50) erfolgt eine Initialisierung der verwendeten Variablen, wobei *j* den ersten Container bezeichnet, der zwischen der momentanen Containerbelegung und der temporären Containerbelegung unterschiedlich ist. Die Variable *i* bezeichnet daraufhin das erste Paket nach einem ersten freien Speicherbereich im Container mit dem Index *j*. Die Variable *p* bezeichnet die Position innerhalb des Containers, an der dieser freie Speicherbereich beginnt. Nach dieser Initialisierung wird überprüft, ob das Paket mit dem Index *i* in den Container mit dem Index j passt (Block 52). Wenn das Paket mit dem Index *i* dem Container mit dem Index *j* zugeordnet werden kann, wird dieses Paket in diesem Container verschoben (Block 54). Wenn das Paket mit dem Index *i* nicht dem Container mit dem Index *j* zuordenbar ist, wird die Variable *j* inkrementiert und die Variable p neu initialisiert (Block 56). Im Anschluss an Block 56 wird das Paket mit dem Index *i* dem auf diese Weise neu ausgewählten Container mit dem neuen Index *j* zugeordnet. Nach Platzierung des Paketes mit dem Index *i* in dem jeweiligen Container mit dem Index *j* wird der Inhalt der Variablen *p* um die Größe des Paketes *i* erhöht (Block 58). Abschließend wird die Variable *i* inkrementiert (Block 60). Schließlich wird überprüft, ob noch weitere Pakete zuzuordnen sind; solange dies der Fall ist, ist die Bedingung *"i≤in"* erfüllt und ggf. zum Block 52 verzweigt (Block 62). Sind alle Pakete bearbeitet (*i>in*) ist die Kompaktifizierung der Containerbelegung beendet. Beim Vergleich der Darstellungen in FIG 4 und FIG 5 fällt auf, dass die dargestellten Algorithmen im Wesentlichen identisch sind. Deshalb wird auch erwähnt, dass zum Erhalt der Ziel-Containerbelegung (vgl. FIG 4) und zum Erhalt der temporären Containerbelegung (vgl. FIG 5) der gleiche Algorithmus verwendet wird.

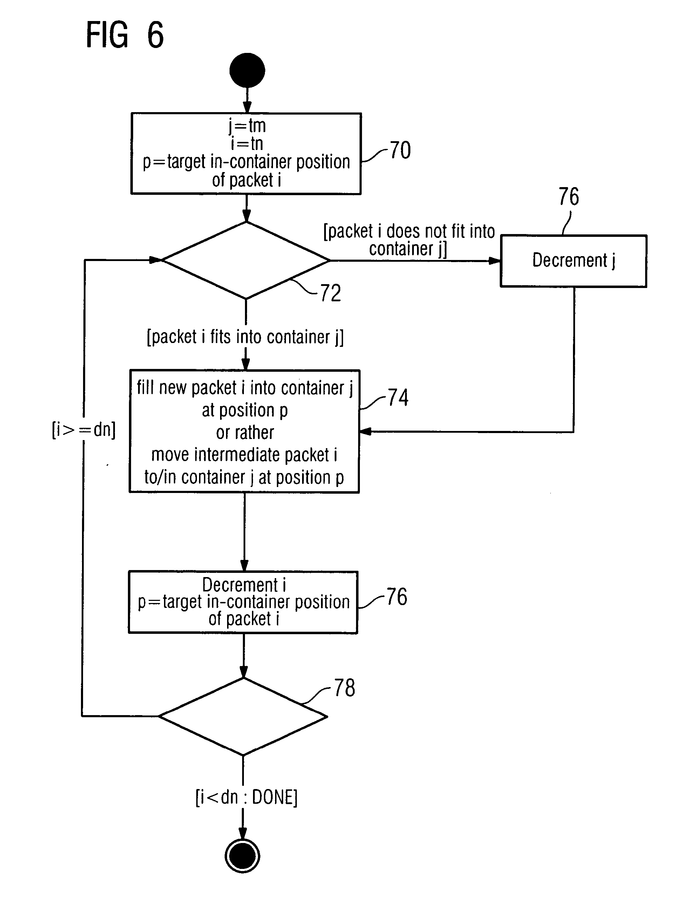

Im Anschluss an die Kompaktifizierung, z.B. gemäß dem in FIG 5 dargestellten Ablauf, erfolgt die Expansion der Containerbelegung, die im Folgenden anhand von FIG 6 näher erläutert wird.

Bei dem in FIG 6 dargestellten Ablauf bezeichnen die Variablen tm eine Anzahl von Containern in der Ziel-Containerbelegung, also der Zielkonfiguration, *j* einen Containerindex, *tn* eine Anzahl von Paketen in der Ziel-Containerbelegung, *dn* ein erstes Paket, das nicht im Zielcontainer oder nicht an der Zielposition gespeichert ist, *i* einen Paketindex und *p* eine Position innerhalb eines Containers. Beim Ausführen der in FIG 6 dargestellten Verfahrensschritte erfolgt zunächst eine Initialisierung (Block 70); sodann wird überprüft (Block 72), ob das Paket mit dem Index *i* in den Container mit dem Index *j* passt. Ist dies der Fall, wird das Paket mit dem Index *i* in den Container mit dem Index *j* verschoben oder dieses Paket in diesem Container platziert, und zwar an der Position *p* (Block 74). Hat sich im Block 72 ergeben, dass das derzeit betrachtete Paket nicht in den derzeit betrachteten Container passt, wird der Index zur Referenzierung des derzeit betrachteten Containers, also die Variable *j* dekrementiert (Block 76). Danach erfolgt die Platzierung des momentanen, durch den Index *i* referenzierten Paketes in dem neu ausgewählten Container (Block 74). Abschließend wird die Variable *i* zur Referenzierung des aktuellen Paketes dekrementiert und der Variablen *p* ein Wert für die Zielposition des neu referenzierten Paketes im jeweiligen Container zugewiesen (Block 76). Schließlich wird überprüft, ob noch weitere Pakete zu bearbeiten sind, wobei entweder zurück zum Block 72 verzweigt wird, oder die Bearbeitung abgeschlossen ist. Dies erfolgt anhand eines Vergleichs der Variablen *i* und *dn* (Block 78).

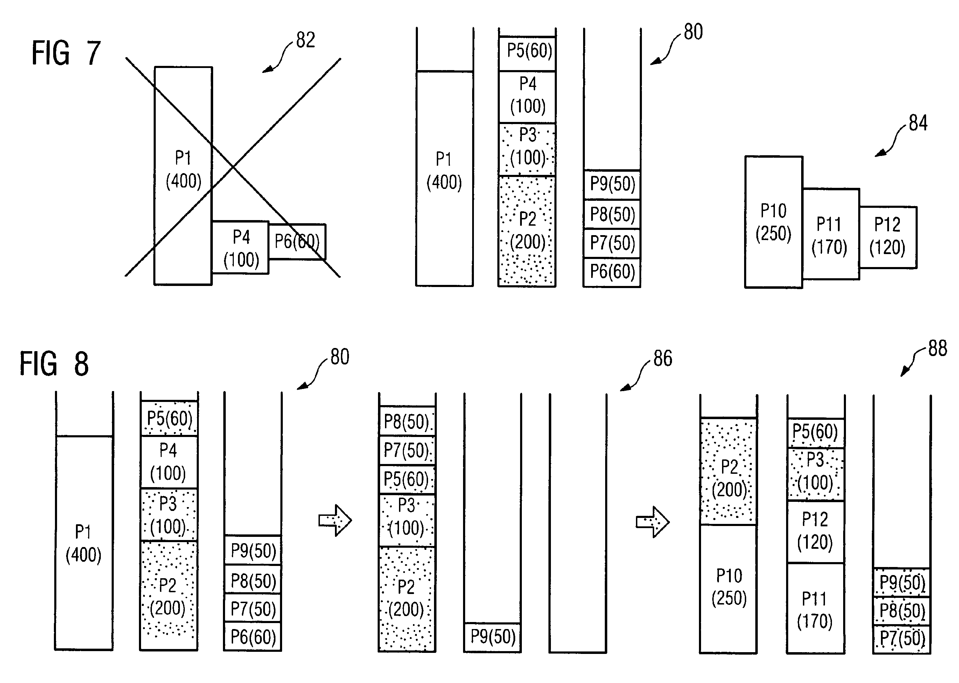

Anhand von FIG 7 und FIG 8 erfolgt im Weiteren eine Veranschaulichung eines Ablaufs des Verfahrens gemäß der Erfindung.

In FIG 7 ist dazu eine momentane Containerbelegung 80 gezeigt, wobei in Bezug auf diese aktuelle Konfiguration im gewählten Szenario davon ausgegangen wird, dass eine Anzahl von Paketen gelöscht werden soll - zu löschende Pakete 82 - und eine Anzahl von Paketen neu hinzukommt - hinzukommende Pakete 84. Dazu werden, wie in FIG 8 dargestellt, ausgehend von der momentanen Containerbelegung 80 mit dem Algorithmus zunächst eine temporäre Containerbelegung (temporäre Konfiguration) 86 und eine Ziel-Containerbelegung (Zielkonfiguration) 88 erzeugt. Beim Übergang von der momentanen Containerbelegung 80 zur temporären Containerbelegung 86 sind die zu löschenden Pakete 82 (vergleiche FIG 7) gelöscht. Hinsichtlich der verbleibenden Pakete hat die Kompaktifizierung stattgefunden. Es haben also die in FIG 5 dargestellten Verfahrensabläufe stattgefunden. Bei Übergang von der temporären Containerbelegung 86 zur Ziel-Containerbelegung 88 kommen die hinzuzufügenden Pakete 84 hinzu. Es haben also die in FIG 6 dargestellten Verfahrensabläufe der Expansion stattgefunden.

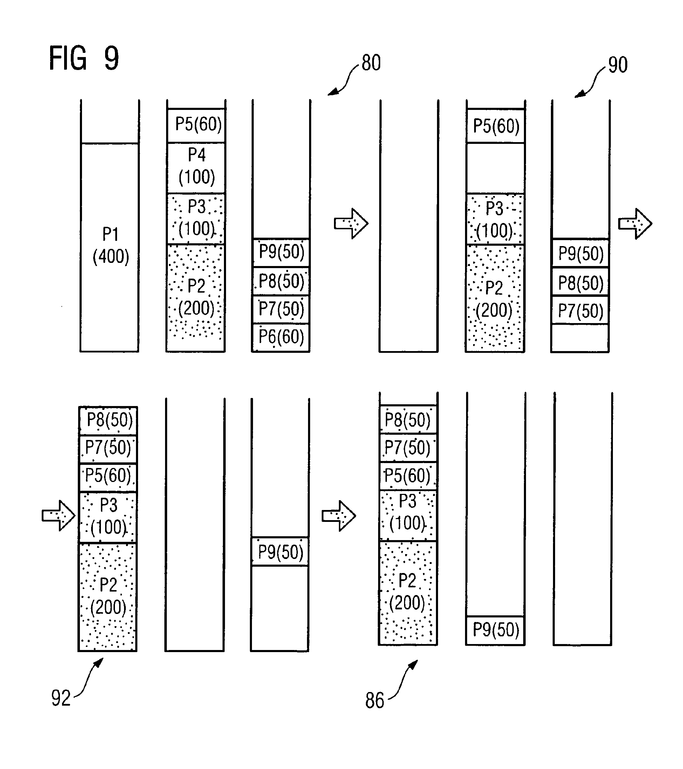

Für das dargestellte Beispiel gemäß FIG 7 und FIG 8 wird nachfolgend anhand von FIG 9 der Vorgang der Kompaktifizierung näher erläutert.

In FIG 9 sind oben links die Startkonfiguration 80 und unten rechts die temporäre Containerbelegung 86 dargestellt. Eine der Startkonfiguration 80 nachfolgende erste Zwischenkonfiguration 90 unterscheidet sich von der Startkonfiguration 80 dadurch, dass die zu löschenden Pakete 82 (vergleiche FIG 7) entfernt sind. Die zu löschenden Pakete 82 sind dabei z.B. daran zu erkennen, dass es sich um Pakete handelt, die in der Ziel-Containerbelegung 88 (FIG 8) nicht vorhanden sind. In einer auf die erste Zwischenkonfiguration 90 folgenden zweiten Zwischenkonfiguration 92 kommt es zur Kompaktifizierung der verbleibenden Pakete, indem bei der dargestellten Momentaufnahme der ganz links dargestellte Container entsprechend dem Container in der temporären Containerbelegung aufgebaut wird. Im Ergebnis wird in der zweiten Zwischenkonfiguration der mittlere Container leer. Anschließend wird dieser zuvor leere Container so eingerichtet, dass er dem Layout gemäß der temporären Containerbelegung 86 entspricht. Das Ergebnis der Kompaktifizierung ist die temporäre Containerbelegung 86.

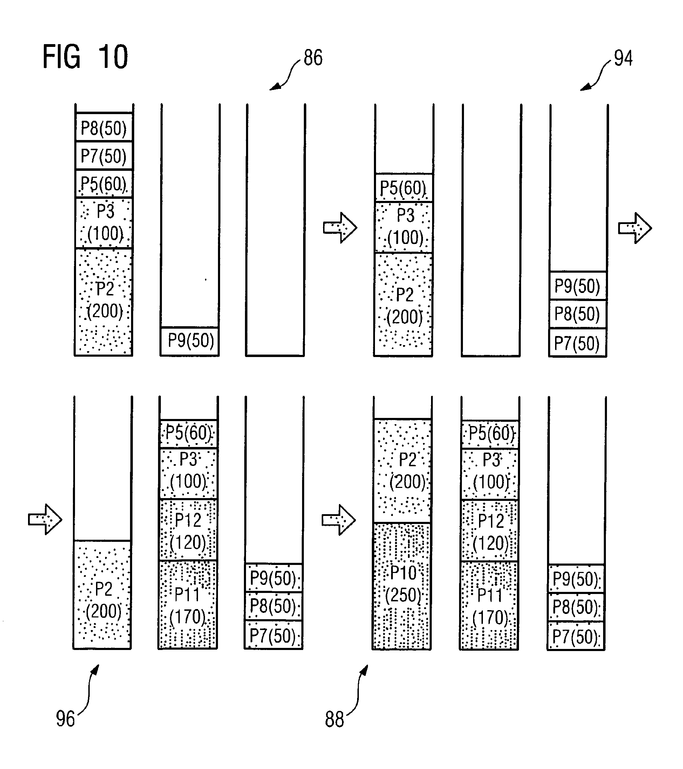

Abschließend wird der Vorgang der Expansion beim Übergang von der temporären Containerbelegung 86 (vergleiche FIG 8) zur Ziel-Containerbelegung 88 (FIG 8) anhand der Darstellung in FIG 10 erläutert: Oben links ist die temporäre Containerbelegung 86 als Ergebnis der Kompaktifizierung dargestellt. Unten rechts ist die Ziel-Containerbelegung 88 dargestellt. Beim Übergang von der temporären Containerbelegung 86 zu einer weiteren ersten Zwischenkonfiguration 94 wird der ganz rechts dargestellte Container mit all den Paketen befüllt, die gemäß der Ziel-Containerbelegung 88 für diesen Container vorgesehen sind. Der mittlere Container wird dabei leer. In einem nächstfolgenden Schritt, der als weitere zweite Zwischenkonfiguration 96 dargestellt ist, wird der mittlere Container entsprechend dem für die Ziel-Containerbelegung 88 vorgesehenen Layout aufgebaut. Dabei werden aus den hinzukommenden Paketen 84 (vergleiche FIG 7) zwei neue Pakete hinzugefügt. In einem abschließenden Schritt, der zur Ziel-Containerbelegung 88 führt, wird der ganz links dargestellte Container entsprechend dem für die Ziel-Containerbelegung 88 vorgesehenen Layout aufgebaut, wobei aus den neu hinzukommenden Paketen 84 das bisher noch nicht berücksichtigte Paket aufgenommen wird.

Im Ergebnis ist mit der Ziel-Containerbelegung 88 eine dynamische Änderung der Belegung einer vorgegebenen oder vorgebbaren Anzahl von Containern als Datenspeicher in einem technischen System erreicht, wobei während der gesamten Änderung diejenigen Container, die ausgehend von der momentanen Containerbelegung auch in der Ziel-Containerbelegung 88 vorhanden sind, erreichbar oder verfügbar bleiben. Neu hinzukommende Pakete werden nach einer Kompaktifizierung den einzelnen Containern zugeordnet, so dass sichergestellt ist, dass sämtliche Pakete, sofern ausreichend Speicherplatz zur Verfügung steht, in den vorhandenen Containern Platz finden.

Als Vorteil der Erfindung ergibt sich damit insbesondere, dass dynamisches Umkonfigurieren, d.h. das Entfernen oder Hinzufügen von Paketen innerhalb der Kapazitätsgrenzen zu im Wesentlichen beliebigen Zeitpunkten möglich ist. Das Umkonfigurieren erfolgt dabei immer ohne "Stoß", d.h. es erfolgt kein Entladen der Container und ein Neuaufbau der Container von einem Zwischenspeicher, einer so genannten "Halde" (heap). Stattdessen verbleibt jedes Paket, das in einem der vom System umfassten Container platziert ist, bis zu seinem Entfernen durch einen Löschauftrag auch während der gesamten Rekonfiguration im System, so dass abgesehen von kurzen Zeitspannen, während ein Paket von einem Container in einen anderen Container "umzieht", stets ein Zugriff darauf möglich ist. Die Entscheidung, ob ein Paket in das System aufgenommen werden kann, kann ohne Kenntnis der Historie des Systems getroffen werden, weil durch die Kompaktifizierung und die Expansion eine besonders günstige Ausnutzung der im System zur Verfügung stehenden Container möglich ist. Schließlich kann das Verfahren gemäß der Erfindung auf eine beliebige Anzahl von Containern angewandt werden und das Verfahren benötigt keine zusätzlichen Ressourcen.

## Patentansprüche

1. Verfahren zum Betrieb eines Automatisierungssystems (10) mit einem Speicher (18), in dem eine Mehrzahl von Containern (C1, C2) gebildet ist,
wobei in jedem Container (C1, C2) eine Anzahl von Paketen (P) speicherbar ist oder gespeichert wird,
**dadurch gekennzeichnet, dass**
ausgehend von einer momentanen Containerbelegung (80) durch darin gespeicherte oder speicherbare Pakete eine Ziel-Containerbelegung (88) mit einem Algorithmus ermittelt wird und eine Platzierung der Pakete in den Containern (C1, C2) gemäß der ermittelten Ziel-Containerbelegung (88) erfolgt.

2. Verfahren nach Anspruch 1, wobei die Platzierung der Pakete (P) in den Containern (C1, C2) gemäß der ermittelten Ziel-Containerbelegung (88) eine Kompaktifizierung und eine Expansion der Containerbelegung umfasst und wobei während der Kompaktifizierung eine temporäre Containerbelegung (86) erzeugt wird, die in die Ziel-Containerbelegung (88) überführbar ist.

3. Verfahren nach Anspruch 2, wobei die oder jede temporäre Containerbelegung (86) zumindest die sowohl in der momentanen Containerbelegung (80) als auch in der Ziel-Containerbelegung (88) vorhandene Pakete (P) im System (10) belässt.

4. Verfahren nach Anspruch 2, wobei die temporäre Containerbelegung (86) mit demselben Algorithmus erzeugt wird, der auch für die Ermittlung der Ziel-Containerbelegung (88) verwendet wird.

5. Verfahren nach Anspruch 2 oder 3, wobei während der Kompaktifizierung zum Löschen vorgesehene Pakete (P) gelöscht werden.

6. Verfahren nach Anspruch 4, wobei Pakete (P) als zum Löschen vorgesehen erkennbar sind, wenn sie in der momentanen Containerbelegung (80) aber nicht in der Ziel-Containerbelegung (88) enthalten sind.

7. Verfahren nach Anspruch 4 oder 5, wobei während der Kompaktifizierung, insbesondere nachdem evtl. zum Löschen vorgesehene Pakete (P) gelöscht wurden, die Pakete (P) den Containern gemäß der temporären Containerbelegung (86) zugeordnet werden.

8. Verfahren nach Anspruch 6, wobei im Anschluss an die Kompaktifizierung die Expansion der Containerbelegung erfolgt, indem die Pakete (P) in den Containern gemäß der Ziel-Containerbelegung (88) platziert werden.

9. Verfahren nach Anspruch 7, wobei während der Expansion der Containerbelegung neue Pakte (P) aufgenommen werden.

10. Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

11. Computerprogrammprodukt, insbesondere Speichermedium, mit einem durch einen Computer ausführbaren Computerprogramm gemäß Anspruch 9.

12. Automatisierungssystem mit Mitteln zur Ausführung des Verfahrens nach einem der Ansprüche 1 bis 8, insbesondere einer Verarbeitungseinheit zur Ausführung des Computerprogramms nach Anspruch 9 und einem Speicher mit einer Implementation des Computerprogramms nach Anspruch 9.
